# EUROPÄISCHE PATENTSCHRIFT

(11) **EP 0 768 337 B1**
(45) Veröffentlichungstag und Bekanntmachung des Hinweises auf die Patenterteilung: **28.06.2000**
(21) Anmeldenummer: 96115711.2
(22) Anmeldetag: 01.10.1996
(51) Int. Cl.: C08K 5/04, C08F 6/00, C08L 25/04

(54) **Thermoplastische Formmassen**
Thermoplastic moulding compositions
Masses à mouler thermoplastiques

(30) Priorität: 13.10.1995 DE 19538207
(43) Veröffentlichungstag der Anmeldung: 16.04.1997
(73) Patentinhaber: BAYER AG, 51368 Leverkusen (DE)
(72) Erfinder: Sarabi, Bahman, Dr., 47803 Krefeld (DE); Reinking, Klaus, Dr., 42929 Wermelskirchen (DE); Alberts, Heinrich, Dr., 51519 Odenthal (DE); Piejko, Karl-Erwin, Dr., Longmeadow, MA 01106 (US); Leitz, Edgar, Dr., 41541 Dormagen (DE)

(56) Entgegenhaltungen:
- EP-A- 0 480 383
- DE-A- 3 107 732
- DE-A- 3 724 709

## Beschreibung

Die vorliegende Erfindung betrifft thermoplastische Formmassen aus Polymerisaten aromatischer Vinylverbindungen sowie aus Legierungen dieser Polymerisate mit anderen Kunststoffen. Diese Formmassen sind dadurch gekennzeichnet, daß sie CH-acide organische Verbindungen enthalten. Charakteristisch für die erfindungsgemäßen thermoplastischen Formmassen ist, daß ihr Gehalt an Monomeren außerordentlich niedrig ist.

Nach den üblichen Verfahren zur Herstellung von Polymerisaten aromatischer Vinylverbindungen - Masse-, Lösungs-, Suspensions-, Emulsions- und Fällungs-Polymerisationen - werden Formmassen erhalten, die in der Regel noch geringe Anteile von Restmonomeren enthalten. Für eine Reihe wichtiger Anwendungen, z.B. Spielzeuge und Lebensmittelverpackungen müssen die Restmonomerenkonzentrationen in den Polymerisaten bestimmte gesetzlich festgelegte Grenzwerte unterschreiten. Häufig enthält die Rohware Restmonomere in höheren als den zulässigen Konzentrationen. Es ist daher erforderlich, die Restmonomergehalte für die Endanwendungen zu reduzieren.

Dazu bedient man sich verschiedener Verfahren. Das übliche Verfahren ist die Entfernung der flüchtigen Restmonomeren aus den Polymerisaten in ein- oder mehrstufigen Entgasungsaggregaten, z.B. Vakuumextrudern, wie es in den Patentschriften US-A 2 727 884 und US-A 2 941 935 beschrieben wird. Ein wirksames Verfahren zur Entfernung von Restmonomeren aus Homo- und Copolymeren des Styrols besteht darin, diesen vor einer Reextrusion im Entgasungsextruder Wasser in kleinen Mengen zuzusetzen, so daß die Restmonomeren dann durch Wasserdampfdestillation entfernt werden. Dieses Verfahren ist aber in geschlossenen Knetern, wie sie z.B. fast ausschließlich zur Herstellung von ABS-Formmassen verwendet werden, nicht möglich. Weiterhin ist dieses Verfahren nicht anwendbar zur Herstellung von Legierungen mit hydrolysenempfindlichen Kunststoffen wie Polycarbonat. Schließlich stellt jede Reextrusion eine erhebliche Kostenerhöhung dar. Andere Verfahren bestehen darin, die Monomeren bei erhöhten Temperaturen, die in der Regel oberhalb der Glasübergangstemperatur der Polymerisate liegen, mit geeigneten Zusätzen zur Reaktion zu bringen und dadurch zu entfernen. Derartige Zusätze sind z.B. Sulfonsäurehydrazide (US-A 4 124 658) und Carbonsäurehydrazide (DE-OS 31 07 732).

Alle diese Verfahren sind jedoch unbefriedigend, da sie zwar die Konzentrationen an Restmonomeren senken können, jedoch häufig nicht in ausreichendem Maße oder nur unter hohem technischen Aufwand, dem wirtschaftliche Aspekte entgegenstehen. Aus diesem Grunde werden Formmassen gesucht, die weitgehend frei von Monomeren sind und die trotzdem einfach und wirtschaftlich hergestellt werden können.

Es wurde nun gefunden, daß man Formmassen mit niedrigen Restmonomerengehalten erhält, wenn man den Polymerisaten des Styrols 0,5 bis 10 Gew.-%, insbesondere 0,5 bis 5 Gew.-% CH-acide organische Verbindungen bei Temperaturen, die oberhalb der Glasübergangstemperaturen der Polymeren liegen, zumischt. Die Restmonomerengehalte sind dann besonders niedrig, wenn den Polymerisaten außer CH-aciden organischen Verbindungen 0,01 bis 1 Gew.-% weiterer, vorwiegend alkalischer Verbindungen, die bekannte Katalysatoren der Michael-Additionsreaktionen darstellen, zugemischt worden sind.

Die Polymerisate, denen CH-acide organische Verbindungen sowie gegebenenfalls als Katalysatoren für Michael-Additionsreaktionen wirksame weitere Verbindungen zugemischt worden sind, enthalten die Additionsreaktionsprodukte der zugemischten CH-aciden organischen Verbindungen mit den Monomeren sowie gegebenenfalls überschüssige CH-acide organische Verbindungen. Aus der Anwesenheit der CH-aciden Verbindungen und deren Umsetzungsprodukten mit Restmonomeren für Homo- und Copolymere des Styrols ergeben sich weitere technologische Vorteile. So werden die Viskositäten der Schmelzen der Homo- und Copolymeren erheblich gesenkt, wodurch Verarbeitbarkeit durch Spritzgießen und Oberflächenqualität der Formteile verbessert werden. Trotz der niedrigeren Viskositäten der Schmelzen besitzen die Formteile unveränderte mechanische Eigenschaften, insbesondere unverändert hohe Zähigkeiten.

Gegenstand der vorliegenden Erfindung sind demnach thermoplastische Formmassen aus Polymerisaten aromatischer Vinylverbindungen und 1 bis 10 Gew.-%, bezogen auf die Polymerisatmenge, CH-aciden organischen Verbindungen. Gegebenenfalls enthalten sie zusätzlich 0,01 bis 1,0 Gew.-%, bezogen auf die Polymerisatmenge, an alkalischen Katalysatoren oder Tetraalkylammoniumfluoriden.

Die in der vorliegenden Erfindung zum Einsatz kommenden CH-aciden organischen Verbindungen werden durch die Formel 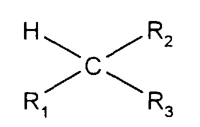 beschrieben, in der
- R₁: für Wasserstoff, einen aliphatischen, cycloaliphatischen, aromatischen oder aliphatisch-aromatischen Rest und R₂ und R₃ für Reste der Strukturen 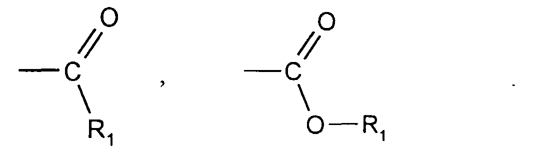
stehen.

Beispiele für erfindungsgemäße CH-acide organische Verbindungen sind Malonsäureester, monosubstituierte Malonsäureester wie Butylmalonsäure-diethylester, β-Ketocarbonsäureester wie Acetessigsäureethylester und β-Diketone wie 2,4-Pentandion. Theoretisch kommen auch weitere CH-acide organische Verbindungen wie Cyanessigsäureester, Malodinitril oder aliphatische Nitroverbindungen in Betracht, scheiden aber aufgrund physiologischer Bedenklichkeit oder mangelnder thermischer Stabilität aus.

Einsetzbare alkalische Katalysatoren sind beispielsweise die Alkalisalze der oben genannten CH-aciden organischen Verbindungen, Alkalialkoholate wie Kalium-tert.-butylat oder Amine wie Tributylamin. Weiterhin können Tetraalkylammoniumfluoride wie Tetrabutylammoniumfluorid in den oben genannten Konzentrationen als Katalysatoren eingesetzt werden.

Erfindungsgemäße Polymerisate aromatischer Vinylverbindungen sind Polymerisate von Styrol oder dessen Derivaten, wie α-Methylstyrol, p-Methylstyrol oder Chlorstyrol. Diese können mit weiteren Monomeren copolymerisiert sein.

Als Comonomere kommen alle zur Copolymerisation mit Styrol oder dessen Derivaten fähigen Mono- und Divinylverbindungen in Betracht, in erster Linie aber Acrylnitril, Maleinsäureanhydrid, Maleinsäureester, Maleinsäureimide, Methacrylsäure, Methacrylsäureester, Acrylsäureester, Acrylsäure, Butadien, Isopren und 2,3-Dimethyl-butadien.

Erfindungsgemäße Polymerisate sind auch Copolymerisate, die durch Pfropfcopolymerisation von Styrol oder dessen Derivaten und gegebenenfalls weiteren Comonomeren auf pfropfcopolymerisationsfähige Polymere entstanden sind. Beispiele für derartige zur Pfropfcopolymerisation geeignete Polymere sind Polybutadien und Polyisopren.

Als typische Beispiele für Copolymerisate des Styrols seien genannt: Styrol-Acrylnitril-Copolymere (SAN), Styrol-Butadien-Copolymere (SB), Pfropfcopolymerisate von Styrol auf Polybutadien (schlagfestes Polystyrol: HIPS) und Pfropfcopolymerisate von Styrol und Acrylnitril auf Polybutadien (ABS).

Die erfindungsgemäßen Polymerisate können auch mit anderen Polymeren legiert sein. Als Legierungspartner kommen alle mit diesen legierfähigen Kunststoffe in Betracht, vor allem aber legierfähige Thermoplaste, also Polymere mit nicht chemisch vernetzten Makromolekülen. Beispiele für derartige legierfähige Thermoplaste sind Polyamid 6, Polyamid 66, Polycarbonat, Polyethylenterephthalat, Polybutylenterephthalat.

Im Falle alkaliempfindlicher Legierungspartner wird das erfindungsgemäße Verfahren bevorzugt ohne alkalische Katalysatoren durchgeführt (z.B. bei Polycarbonaten oder Polyestern). Das erfindungsgemäße Verfahren ist aber auch anwendbar auf Legierungen erfindungsgemäßer Polymerisate mit Polymeren, deren Makromoleküle vernetzt sind. Beispiele dafür sind Legierungen aus Polystyrol und Polybutadien und Legierungen aus Styrol-Acrylnitril-Copolymeren und Polybutadien, in denen das Polybutadien jeweils teilweise vernetzt und bepfropft ist.

Legierungen, auf die das erfindungsgemäße Verfahren angewendet werden kann, sind weiterhin Legierungen aus unterschiedlichen Polymerisaten aromatischer Vinylverbindungen. Beispiele für derartige Legierungen sind Legierungen aus Polystyrol und Pfropfcopolymeren des Styrols auf Polybutadien. Schließlich kann das erfindungsgemäße Verfahren auch angewendet werden bei Legierungen, die neben mehreren unterschiedlichen Polymerisaten aromatischer Vinylverbindungen noch einen oder mehrere weitere Kunststoffe enthalten. Beispiele für derartige Legierungen sind ABS/Polycarbonat- und HIPS/Polyphenylenoxid-Legierungen.

Gegenstand der Erfindung ist auch ein Verfahren zur Herstellung der erfindungsgemäßen Formmassen.

Die Herstellung der erfindungsgemäßen Formmassen wird nach dem erfindungsgemäßen Verfahren in der Weise durchgeführt, daß den Polymerisaten bei Temperaturen oberhalb ihrer Glasübergangstemperatur unter der Einwirkung von Scherkräften CH-acide Verbindungen und gegebenenfalls Katalysatoren zugemischt werden. Dies kann beispielsweise auf beheizten Walzenstühlen oder in Innenknetern erfolgen. Weiterhin ist es möglich, die CH-aciden organischen Verbindungen und Katalysatoren den Polymerisaten bei Raumtemperatur zuzumischen und die Gemische dann unter der Einwirkung von Scherkräften aufzuschmelzen. Dazu benutzt man Cokneter oder Ein- oder Zweiwellenextruder. Hierbei ist es vorteilhaft, die Schmelzen vor der Extrusion zu evakuieren, beispielsweise durch Verwendung von Entgasungsextrudern.

### Beispiele

Die folgenden Beispiele beschreiben die Herstellung von erfindungsgemäßen Formmassen aus Styrol-Acrylnitril-Copolymerisaten (SAN) sowie von Formmassen aus ABS-Kunststoffen. Die Vergleiche der Styrol- und Acrylnitril-Restgehalte dieser erfindungsgemäßen Formmassen mit entsprechenden SAN- und ABS-Formmassen, denen jedoch keine CH-aciden organischen Verbindungen zugemischt worden sind, zeigt, daß die erfindungsgemäßen Formmassen weit weniger Restmonomere enthalten.

Die Messung der Restmonomerengehalte erfolgte dabei gaschromatographisch bei 70 bis 230°C an 50 m langen Säulen der Arten CP Sil 88 und CP Wax 52.

Weiterhin wurden die zum Füllen einer Spritzgießform erforderlichen Spritzdrücke verglichen. Die bessere Verarbeitbarkeit der erfindungsgemäßen Formmassen ergibt sich aus den niedrigeren Spritzdrücken als Folge von niedrigeren Schmelzeviskositäten.

Daß die Zähigkeit von Formteilen aus den erfindungsgemäßen Formmassen nicht verringert ist, zeigt der Vergleich der Kerbschlagzähigkeiten aₖ bzw. der Schlagzähigkeiten aₙ.

### Beispiel 1 bis 4 und Vergleichsbeispiel V 1

### Formmassen aus einem Styrol-Acrylnitril-Copolymerisat:

Ein pulverförmiges Styrol-Acrylnitril-Copolymerisat, hergestellt durch Copolymerisation von 72 Gew.-Teilen Styrol und 28 Gew.-Teilen Acrylnitril, dessen MVR-Wert (melt viscosity ratio) 20 cm³/10 min. bei 220°C unter einer Belastung von 10 kg betrug, wurde mit den in Tab. 1 aufgeführten CH-aciden organischen Verbindungen sowie, in den Beispielen 2 und 4, mit den dort aufgeführten Katalysatoren in den in Tab. 1 genannten Mengenverhältnissen gemischt. Diese Mischungen wurden nach Vortrocknung bei 80°C in einen Innenkneter aufgeschmolzen und bei einer Massetemperatur von 200°C gewalzt und zerkleinert. An den so erhaltenen Granulaten wurden die Restgehalte Styrol und Acrylnitril gemessen.

Aus den Granulaten wurden bei einer Massetemperatur von 240°C und einer Werkzeugtemperatur von 70°C Prüfkörper der Abmessungen 80 x 10 x 4 mm gespritzt. Die zu Füllung des Werkzeuges nötigen Spritzdrücke wurden registriert. Weiterhin wurden die Schlagzähigkeiten aₙ der Prüfkörper gemäß ISO 180/1C gemessen.

Im Versuch V1 wurde das Ausgangscopolymerisat unter den gleichen Bedingungen wie in den Versuchen 1 bis 4, jedoch ohne die erfindungsgemäßen Zusätze behandelt (V1 = Vergleich).

Die Styrol- und Acrylnitrilgehalte des Ausgangscopolymerisats und der erfindungsgemäßen Umsetzungsprodukte sind in Tab. 1 aufgeführt, ebenso die zum Füllen des Werkzeuges erforderlichen Spritzdrücke und die Kerbschlagzähigkeiten der Prüfstäbe.

**Tabelle 1**

| Beispiel | | V1 | 1 | 2 | 3 | 4 |
|---|---|---|---|---|---|---|
| SAN-Copolymer | Gew.-Tle. | 100 | 100 | 100 | 100 | 100 |
| 2,4-Pentandion | Gew.-Tle. | - | 5 | 5 | - | - |
| Acetessigsäureethylester | Gew.-Tle. | - | - | - | 5 | 5 |
| Na-Salz des Acetessigsäureethylesters | Gew.-Tle. | - | - | - | - | 0,5 |
| K-tert.-Butylat | Gew.-Tle. | - | - | 0,1 | - | - |
| Acrylnitril | mg/kg | 23 | <1 | <1 | 4,8 | <1 |
| Styrol | mg/kg | 585 | 230 | 210 | 320 | 260 |
| aₙ | kJ/m² | 30 | 29 | 32 | 30 | 31 |
| Fülldruck | bar | 146 | 123 | 121 | 117 | 125 |

### Beispiele 5 bis 10

### Formmassen aus ABS-Kunststoffen:

Das in Beispielen 1 bis 4 verwendete pulverförmige Styrol-Acrylnitril-Copolymerisat wurde mit einem Pfropfcopolymerisat von 36 Gew.-Teilen Styrol und 14 Gew.-Teilen Acrylnitril auf 50 Gew.-Teilen Polybutadien sowie mit Magnesiumstearat und mit den in den Versuchen 2 bis 4 eingesetzten CH-aciden organischen Verbindungen und den in den Versuchen 2 und 4 eingesetzten alkalischen Katalysatoren gemischt. Die Zusammensetzungen dieser Mischungen sind der Tabelle 2 zu entnehmen.

Die Mischungen wurden nach Vortrocknung bei 80°C 3 Minuten lang bei 180°C in einem 1,2 1 fassenden Innenkneter geknetet. Die erhaltenen Puppen wurden anschließend auf einem Zweiwalzenstuhl zu Fellen ausgewalzt, die anschließend granuliert wurden. Die Styrol- und Acrylnitrilgehalte der Granulate wurden gemessen. Aus den Granulaten wurden nach Vortrocknung bei 80°C bei einer Massetemperatur von 240°C und einer Werkzeugtemperatur von 70°C Prüfkörper der Abmessungen 80 x 10 x 4 mm gespritzt. Die zum Füllen des Werkzeuges nötigen Spritzdrücke wurden registriert. Weiterhin wurde die Kerbschlagzähigkeit a_{K} der Prüfkörper gemäß ISO 180/1A gemessen.

Die Ergebnisse sind in Tab. 2 aufgeführt.

**Tabelle 2**

| Beispiel | | 5 | 6 | 7 | 8 | 9 | 10 |
|---|---|---|---|---|---|---|---|
| SAN-Copolymer | Gew.-Tle. | 60 | 60 | 60 | 60 | 60 | 60 |
| Pfropfcopolymer | Gew.-Tle. | 40 | 40 | 40 | 40 | 40 | 40 |
| 2,4-Pentandion | Gew.-Tle. | - | 5 | 5 | - | - | 5 |
| Acetessigsäureethylester | Gew.-Tle. | - | - | - | 5 | 5 | - |
| Na-Salz des Acetessigsäureethylesters | Gew.-Tle. | - | - | - | - | 0,5 | - |
| Tefrabutylammoniumfluorid | Gew.-Tle. | - | - | - | - | - | 0,5 |
| K-tert.-Butylat | Gew.-Tle. | - | - | 0,1 | - | - | - |
| Acrylnitril | mg/kg | 9 | 3,7 | 1,2 | 3,9 | 2,4 | <1 |
| Styrol | mg/kg | 420 | 370 | 290 | 350 | 320 | 260 |
| a_{K} | kJ/m² | 30 | 31 | 29 | 31 | 31 | 30 |
| Fülldruck | bar | 193 | 165 | 165 | 181 | 168 | 171 |

## Patentansprüche

1. Formmassen aus Polymerisaten aromatischer Vinylverbindungen und 1 bis 10 Gew.-%, bezogen auf die Polymerisatmenge, CH-aciden organischen Verbindungen, wobei die Formmassen kein Polyphenylenoxid enthalten.

2. Formmassen gemäß Anspruch 1, die zusätzlich 0,01 bis 1 Gew.-%, bezogen auf die Polymerisatmenge, an alkalischen Katalysatoren oder Tetraalkylammoniumfluoriden enthalten.

3. Verfahren zur Herstellung der Formmassen gemäß Anspruch 1 und 2, dadurch gekennzeichnet, daß den Polymerisaten bei Temperaturen oberhalb ihrer Glasübergangstemperaturen unter Einwirkung von Scherkräften CH-acide organische Verbindungen und gegebenenfalls Katalysatoren zugemischt werden.

4. Verwendung von CH-aciden Verbindungen in Formmassen aus Polymerisaten aromatischer Vinylverbindungen zur Verringerung des Restmonomergehalts, wobei die Formmassen kein Polyphenylenoxid enthalten.

## Claims

1. Moulding compositions comprising polymers of aromatic vinyl compounds and 1 to 10 % by weight, with respect to the amount of polymer, of CH-acid organic compounds, wherein the moulding compositions contain no polyphenylene oxide.

2. Moulding compositions according to claim 1, which additionally contain 0.01 to 1 % by weight, with respect to the amount of polymer, of alkaline catalysts or tetraalkylammonium fluorides.

3. A method of producing the moulding compositions according to claims 1 and 2, characterised in that CH-acid organic compounds and optionally catalysts are admixed with the polymers at temperatures above the glass transition temperatures of the latter under the action of shearing forces.

4. Use of CH-acid compounds in moulding compositions comprising polymers of aromatic vinyl compounds in order to reduce the content of residual monomer, wherein the moulding compositions contain no polyphenylene oxide.

## Revendications

1. Matières à mouler consistant en polymères de composés vinyliques aromatiques et 1 à 10 % en poids, par rapport aux polymères, de composés organiques à CH acide, sous réserve que ces matières à mouler ne contiennent pas d'oxyde de polyphénylène.

2. Matières à mouler selon la revendication 1, qui contiennent en outre de 0,01 à 1 % en poids, par rapport aux polymères, de catalyseurs alcalins ou de fluorures de tétraalkylammonium.

3. Procédé de préparation des matières à mouler selon les revendications 1 et 2, caractérisé en ce l'on mélange aux polymères, à des températures supérieures à leur température de transition du second ordre et sous l'action de forces de cisaillement, des composés organiques à CH acide et le cas échéant des catalyseurs.

4. Utilisation de composés à CH acide dans des matières à mouler consistant en polymères de composés vinyliques aromatiques en vue de diminuer la teneur en monomères résiduels, sous réserve que les matières à mouler ne contiennent pas d'oxyde de polyphénylène.
